# EUROPÄISCHE PATENTANMELDUNG

(11) **EP 1 835 193 A2**
(43) Veröffentlichungstag der Anmeldung: **19.09.2007**
(21) Anmeldenummer: 07002199.3
(22) Anmeldetag: 01.02.2007
(51) Int. Cl.: F16D 23/06

(54) **Druckstück für Synchroneinrichtungen**

(30) Priorität: 14.03.2006 DE 202006004181 U
(71) Anmelder: Schwarzbich, Jörg, 33615 Bielefeld (DE)
(72) Erfinder: Schwarzbich, Jörg, 33615 Bielefeld (DE)
(74) Vertreter: Wiebusch, Manfred

(57) **Zusammenfassung**

Druckstück für Synchroneinrichtungen in Schaltgetrieben mit einem Zahnrad (28), einer Schiebemuffe (30), die über eine Innenverzahnung (32) verschiebbar mit dem Zahnrad (28) in Eingriff steht, und mit zwischen dem Zahnrad (28) und der Schiebemuffe (30) angeordneten Druckstücken (10), die jeweils ein in einer axialen Nut (40) des Zahnrads (28) aufgenommenes Gehäuse (12) und eine Feder (18) aufweisen, die ein Druckglied (14) gegen die Innenverzahnung (32) der Schiebemuffe (30) vorspannt, dadurch gekennzeichnet, daß das Gehäuse (12) des Druckstücks (10) eine flache, quaderförmige Gestalt hat und daß die Feder (18) sich quer zur Vorspannungsrichtung erstreckt, sich mit ihrem Rand am Gehäuse (12) oder am Zahnrad (28) abstützt und mit ihrem Mittelteil das Druckglied (14) abstützt.

## Beschreibung

Die Erfindung betrifft ein Druckstück für Synchroneinrichtungen in Schaltgetrieben mit einem Zahnrad, einer Schiebemuffe, die über eine Innenverzahnung verschiebbar mit dem Zahnrad in Eingriff steht, und mit zwischen dem Zahnrad und der Schiebemuffe angeordneten Druckstücken, die jeweils ein in einer axialen Nut des Zahnrads aufgenommenes Gehäuse und eine Feder aufweisen, die ein Druckglied gegen die Innenverzahnung der Schiebemuffe vorspannt.

Synchroneinrichtungen dienen in Schaltgetrieben zur Herstellung eines Gleichlaufs zwischen zwei auf einer gemeinsamen Welle sitzenden Zahnrädern, bevor eine Antriebsverbindung zwischen diesen Zahnrädern hergestellt wird. Zu diesem Zweck ist zwischen dem fest auf der Welle sitzenden Antriebszahnrad und dem drehbar auf der Welle gelagerten Abtriebszahnrad ein Synchronring vorgesehen, der reibschlüssig gegen das Abtriebszahnrad andrückbar ist. Wenn die auf dem Antriebszahnrad sitzende Schiebemuffe in Richtung auf das Abtriebszahnrad verschoben wird, läuft ihre Innenverzahnung zunächst auf angeschrägte Zähne des Synchronrings auf, so daß der Synchronring mit seiner Reibfläche gegen das Abtriebszahnrad gedrückt wird. Solange die Drehzahlen von Antriebs- und Abtriebszahnrad noch nicht übereinstimmen, verhindert das durch den Reibschluß auf den Synchronring ausgeübte Drehmoment ein Weiterschieben der Schiebemuffe. Erst bei Drehzahlgleichheit läßt sich der Synchronring relativ zur Schiebemuffe in eine Position verdrehen, in der die Schiebemuffe auf eine Außenverzahnung des Abtriebszahnrads aufgeschoben werden kann, so daß das Abtriebszahnrad drehfest mit dem Antriebszahnrad gekoppelt wird. Die zwischen dem Antriebszahnrad und der Schiebemuffe angeordneten Druckstücke beseitigen das Spiel zwischen dem Antriebszahnrad und der Schiebemuffe und tragen so zur Geräusch- und Verschleiß-minderung bei.

Eine Synchroneinrichtung mit Druckstücken der eingangs genannten Art wird in EP 1 400 717 A1 beschrieben. Das Gehäuse des Druckstücks hat eine topfförmige Gestalt und nimmt eine Schraubenfeder sowie eine das Druckglied bildende Kugel auf. Das Gehäuse stützt sich kippbar auf dem Grund der Nut des Zahnrades ab, so daß die Kugel, die in eine Rastvertiefung der Schiebemuffe eingreift, innerhalb gewisser Grenzen der axialen Bewegung der Schiebemuffe folgen kann.

Aus DE 195 80 558 C1 ist eine Synchroneinrichtung bekannt, bei der die zur Aufnahme der Druckstücke dienenden axialen Nuten ein T-förmiges Profil haben. Die Gehäuse der Druckstücke haben eine zu diesem Profil komplementäre Form und stützen sich in der Nähe des mit dem Druckglied versehenen Endes auf den Schultern der T-förmigen Nut ab. Auf diese Weise sind die Druckstücke verschiebbar in den Nuten geführt. Die Druckglieder werden durch Schraubenfedern in die Rastvertiefungen in der Innenverzahnung der Schiebemuffe vorgespannt. Wenn die Schiebemuffe verschoben wird, werden die Druckstücke zunächst als Ganzes ein Stück weit mitgenommen, bis sie an den Synchronring anstoßen. Erst dann werden die Druckglieder entgegen der Kraft der Feder zurückgedrückt, so daß sich die Schiebemuffe unter Überwindung eines gewissen Rastwiderstands weiter verschieben läßt. Die Herstellung der T-förmig profilierten Nuten ist jedoch relativ aufwendig. Außerdem wird für die Unterbringung der Druckstücke relativ viel Platz beansprucht. Weiterhin kommt es beim Verschieben der Druckstücke zu hohem Verschleiß, weil die Gehäuse sich nur mit ihren Schultern auf relativ kleiner Fläche in der T-förmigen Nut des Zahnrads abstützen.

Aufgabe der Erfindung ist es, ein Druckstück zu schaffen, das sich einfache herstellen und montieren läßt, eine kompakte Bauweise der Synchroneinrichtung erlaubt und eine leichtgängige Bewegung der Schiebemuffe ermöglicht.

Diese Aufgabe wird erfindungsgemäß dadurch gelöst, daß das Gehäuse des Druckstücks eine flache, quaderförmige Gestalt hat und daß die Feder sich quer zur Vorspannungsrichtung erstreckt, sich mit ihrem Rand am Gehäuse oder am Zahnrad abstützt und mit ihrem Mittelteil das Druckglied abstützt.

Die Feder, beispielsweise eine Blattfeder, eine Tellerfeder, ein Blattfeder- oder Tellerfederpaket oder auch eine Stabfeder, erstreckt in der Tangentialebene des Zahnrades, also in der Ebene senkrecht zu der radialen Richtung, in der das Druckglied vorgespannt wird. Dadurch ist es möglich, das quaderförmige Gehäuse und entsprechend auch die axiale Nut im Zahnrad sehr flach zu halten, so daß eine kompakte Bauweise ermöglicht wird. Die Feder stützt sich mit ihrem Rand am Gehäuse oder an dem Zahnrad ab und ist dabei so in der Nut des Zahnrads gehalten, daß in ihrem Mittelteil ein ausreichender Federweg besteht. Wenn sich die Feder mit ihrem Randbereich direkt auf dem Zahnrad abstützt, kann die Abstützfläche relativ groß sein, so daß bei der axialen Bewegung des Druckstückes nur ein geringer Verschleiß auftritt. Wenn sich die Feder mit ihrem Rand am Gehäuse abstützt, kann sich das Druckstück seinerseits mit seiner gesamten Grundfläche auf dem Zahnrad abstützen, wodurch ebenfalls eine Verschleißminimierung erreicht wird. Aufgrund ihrer relativ großen Grundfläche läßt sich die Feder leicht in das Gehäuse einclipsen. Da in dem Zahnrad nur flache Nuten für die relativ flachen Druckstückgehäuse gebildet zu werden brauchen, wird auch eine Schwächung des Zahnrads vermieden.

Vorteilhafte Ausgestaltungen der Erfindung sind an den Unteransprüchen angegeben.

Das Gehäuse des Druckstücks ist bevorzugt aus Kunststoff hergestellt und bildet an dem Ende, das das Druckglied, beispielsweise eine Rastkugel, aufnimmt, einen Anschlag, der die Rastkugel gegen Herausfallen sichert.

Wenn sich die Feder direkt auf dem Grund der Nut des Zahnrades abstützt, so ist der Grund dieser Nut im mittleren Bereich eingetieft, um einen ausreichenden Federweg zu schaffen. Das Gehäuse kann dann den Rand der Feder so umschließen, daß die Feder der axialen Bewegung des Druckgliedes und des Gehäuses folgt, wenn die Schiebemuffe verschoben wird. Wahlweise ist jedoch auch möglich, die Feder ortsfest in der Nut des Zahnrades zu halten, so daß die Rastkugel bei der Verschiebung der Schiebemuffe wie eine Kugellagerkugel auf der Feder abrollen kann.

Wenn andererseits die Feder in das Gehäuse eingeclipst ist, so daß sie sich mit ihrem Rand am Gehäuse abstützt, bilden das Gehäuse, die Feder und das Druckglied eine vorgefertigte Einheit, die sich leicht montieren läßt.

Bevorzugt weist das Gehäuse auf seiner radial äußeren Oberfläche Vorsprünge auf, die in die Zahnzwischenräume der Innenverzahnung der Schiebemuffe eingreifen. In diesem Fall kann die Schiebemuffe selbst bei einem Bruch der Feder oder bei fehlendem oder klemmendem Druckglied noch durch die Vorsprünge des Gehäuses abstützt werden, so daß selbst in diesem Fall noch ein Verzahnungsklappern zwischen der Schiebemuffe und dem Zahnrad vermieden werden kann.

Im folgenden werden Ausführungsbeispiele der Erfindung anhand der Zeichnung näher erläutert.

Es zeigen:
- Figur 1: einen axialen Schnitt durch ein Druckstück gemäß einer Ausführungsform der Erfindung;
- Figur 2: einen Schnitt längs der Linie II-II in Figur 1;
- Figur 3: das Druckstück gemäß Figur 1 in der Draufsicht;
- Figur 4: das Druckstück gemäß Figur 1 in einer Ansicht von unten;
- Figur 5: einen Schnitt durch das Druckstück in eingefederter Stellung;
- Figur 6: einen Schnitt längs der Linie VI-VI in Figur 5;
- Figur 7: einen axialen Halbschnitt durch eine Synchroneinrichtung mit eingebautem Druckstück; und
- Figur 8: einen radialen Schnitt durch die Synchroneinrichtung im Bereich der Druckstücke.

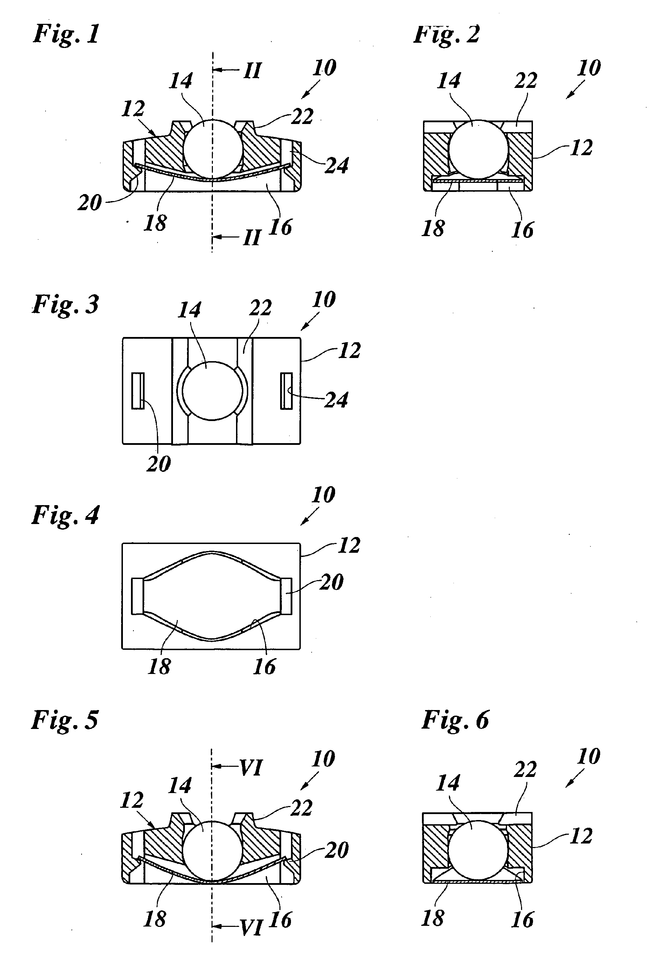

Das in Figur 1 gezeigte Druckstück 10 weist ein flaches, quaderförmiges Gehäuse 12 aus Kunststoff auf, das an seiner Oberfläche leicht gewölbt und damit an die Krümmung der Innenverzahnung einer in Figur 1 nicht gezeigten Schiebemuffe der Synchroneinrichtung angepaßt ist. In der Mitte bildet das Gehäuse 12 einen radial in Bezug auf die Synchroneinrichtung verlaufenden Schacht, der ein Druckglied 14 in der Form einer Rastkugel aufnimmt. Der Schacht ist am in Figur 1 oberen Ende so verengt, daß die Bewegung des Druckgliedes begrenzt wird. Am unteren Ende ist der Schacht ebenfalls verengt, jedoch so, daß sich die Rastkugel von unten einclipsen läßt.

An der Unterseite bildet das Gehäuse 12 eine flache Ausnehmung 16, die nahezu die gesamte Grundfläche des Gehäuses einnimmt. In dieser Ausnehmung ist eine Blattfeder 18 untergebracht, die sich rechtwinklig zur Achse des Schachtes erstreckt und in dem in Figur 1 gezeigten Zustand das Druckglied 14 gegen seinen oberen Anschlag vorspannt. Die Blattfeder 18 stützt sich mit ihren gegenüberliegenden Enden auf Rippen 20 ab, die von der Umfangswand des Gehäuses 12 in die Ausnehmung 16 vorspringen. Beim Zusammenbau des Druckstücks 10 kann zunächst das Druckglied 14 von unten in den Schacht des Gehäuses 12 eingedrückt werden, und anschließend wird die Blattfeder 18 von unten eingeclipst, so daß sie hinter den Rippen 20 einschnappt.

In einer alternativen Ausführungsform wird der Zusammenbau dadurch erleichtert, daß das Gehäuse zweiteilig ausgebildet ist, mit einem Oberteil, das den Schacht für das Druckglied 14 bildet, und einem damit z.B. verrastbaren Unterteil, das die Auflager für die Feder 18 bildet und in das die Feder vor dem Zusammenbau einfach eingelegt werden kann. Eine weitere Alternative besteht darin, daß in dem Gehäuse ein sich seitlich öffnender Schlitz gebildet wird, durch den die Feder 18 eingeschoben werden kann.

Auf der Oberseite des Gehäuses 12 ist auf beiden Seiten des das Druckglied 14 aufnehmenden Schachtes jeweils ein Vorsprung 22 ausgebildet, der sich, wie Figur 2 zeigt, über die gesamte Breite des Gehäuses 12 erstreckt. Weiter außen ist das Gehäuse 12 von rechteckigen Ausnehmungen 24 durchbrochen, die zum Formen der Rippen 20 dienen.

Wie Figur 3 gezeigt, werden die Vorsprünge 22 durch den Schacht für das Druckglied 14 etwas angeschnitten.

In Figur 4 ist die linsenartige Grundrißform der Ausnehmung 16 und der Blattfeder 18 zu erkennen.

Figuren 5 und 6 zeigen das Druckstück im eingefederten Zustand. Das Druckglied 14 ist hier tiefer in den Schacht zurückgedrückt, und die Blattfeder 18 ist stärker durchgebogen, so daß sie mit ihrem unteren Scheitel etwa bündig mit der Unterseite des Gehäuses 12 ist. Aufgrund der Durchbiegung ist die Feder in ihrer Länge verkürzt. Wie Figur 5 zeigt, fallen die als Federauflager dienenden oberen Oberflächen der Rippen 20 schräg nach innen ab. Das führt dazu, daß sich die Feder in dem Maße, in dem sie sich verküzt, auch nach unten absenkt. Daraus ergibt sich der vorteilhafte Effekt, daß bei gegebener Durchbiegung der Feder der Hubweg des Druckgliedes 14 zunimmt. Deshalb läßt sich durch eine relatif steife Feder eine hohe Vorspannung in der in Figur 1 gezeigten Position erreichen, ohne daß beim Einfedern die Federkraft zu stark zunimmt und/oder die Elastizitätsgrenze der Feder überschritten wird.

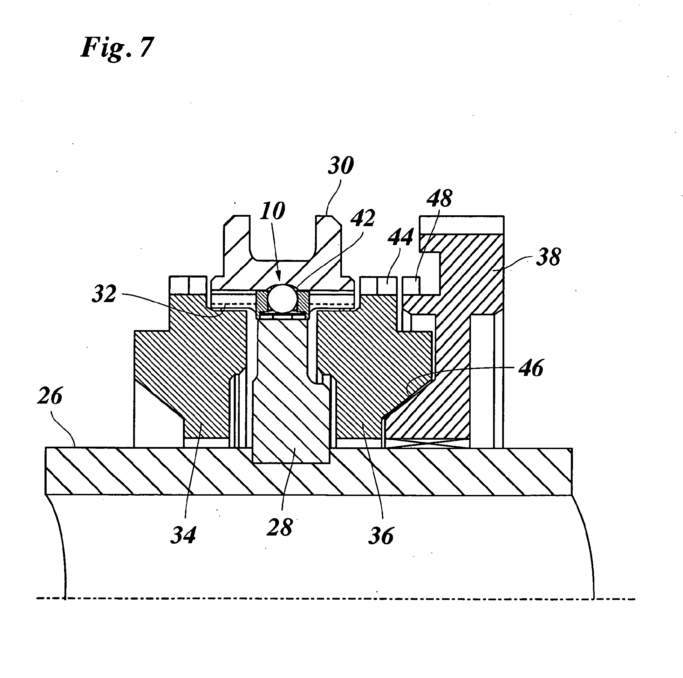

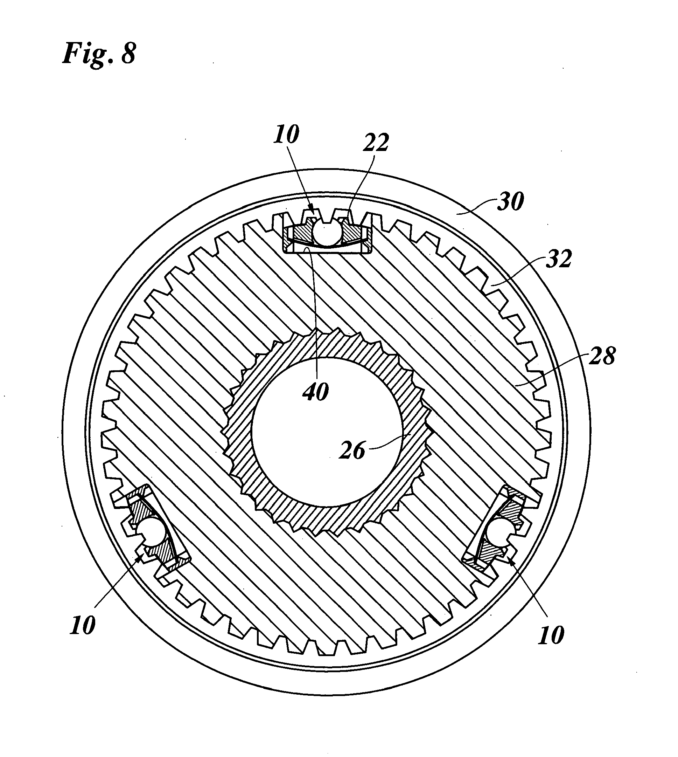

Figuren 7 und 8 zeigen das Druckstück 10 in eingebauter Position in einer Synchroneinrichtung eines Schaltgetriebes.

In Figur 7 ist auf einem drehfest auf einer Welle 26 sitzenden Zahnrad 28 eine Schiebemuffe 30 angeordnet. Die Schiebemuffe greift mit einer Innenverzahnung 32 in die Verzahnung des Zahnrads 28 ein und ist in Axialrichtung der Welle 26 auf dem Zahnrad verschiebbar.

Auf beiden Seiten des Zahnrads 28 sind Synchronringe 34, 36 angeordnet, die sich mit dem Zahnrad 28 und der Schiebemuffe 30 mitdrehen, jedoch relativ zu dem Zahnrad 28 innerhalb eines begrenzten Winkelbereichs verdrehbar sind. Auf der dem Zahnrad 28 entgegengesetzten Seite des Synchronrings 36 ist ein Zahnrad 38 gezeigt, das drehbar auf der Welle 26 gelagert ist und durch die Schiebemufffe 30 drehfest an das Zahnrad 28 gekoppelt werden kann. Auf der vom Zahnrad 28 abgewandten Seite des anderen Synchronrings 34 ist ein nicht gezeigtes weiteres Zahnrad mit anderem Durchmesser angeordnet. Durch Verstellen der Schiebemuffe 30 in der einen oder anderen Richtung kann somit über die Welle 26 entweder das Zahnrad 38 oder das nicht gezeigte weitere Zahnrad angetrieben werden, so daß sich in dem Getriebe unterschiedliche Übersetzungsverhältnisse einstellen lassen.

Wie in Figur 8 zu erkennen ist, weist das Zahnrad 28 in seiner äußeren Umfangsfläche drei in Axialrichtung durchgehende, in Winkelabständen von 120° angeordnete flache Nuten 40 auf, die einen rechteckigen, in Radialrichtung langgestreckten Querschnitt haben und die Außenverzahnung des Zahnrads 28 unterbrechen. In die Nuten 40 sind die Druckstücke 10 eingesetzt, die, wie Figur 7 zeigt, jeweils mit ihrem Druckglied 14 in eine flache, muldenartige Vertiefung 42 eingreifen, die in einem der Zähne der Schiebemuffe 30 ausgebildet ist.

Wenn in Figur 7 die Schiebemuffe 30 etwas nach rechts verschoben wird, läuft die Innenverzahnung 32 auf Zahnschrägen einer Außenverzahnung 44 des Synchronrings 36 auf. Bei dieser Bewegung der Schiebemuffe 30 wird das Druckstück 10 auf Grund des Eingriffs des Druckgliedes 14 in die Vertiefung 42 mitgenommen. Im gezeigten Beispiel wird die Bewegung des Druckstücks 10 dadurch begrenzt, daß das Gehäuse 12 am Synchronring 36 anstößt.

Der Synchronring 36 wird dann mit einer konischen Reibfläche auf einen Außenkonus 46 des Zahnrads 38 geschoben, so daß das Zahnrad 38 durch Reibschluß auf die Drehzahl der Einheit aus Zahnrad 28, Schiebemuffe 30 und Synchronring 36 beschleunigt oder verzögert wird. Solange noch keine Drehzahlübereinstimmung erreicht ist, setzen die Zahnschrägen der Außenverzahnung 44 des Synchronrings 36, der dann noch einem hohen Drehmoment unterliegt, der Bewegung der Schiebemuffe 30 einen solchen Widerstand entgegen, daß die Innenverzahnung 32 noch nicht mit einer Außenverzahnung 48 des Zahnrads 38 in Eingriff gebracht werden kann. Erst nach Angleichung der Drehzahlen kann die Schiebemuffe 30 weiter verschoben werden, bis sie eine drehfeste Verbindung zwischen den Zahnrädern 28 und 38 herstellt. Da das Druckglied 14 an dieser weiteren Bewegung der Schiebemuffe 30 nicht mehr teilnehmen kann, wird sie entgegen der Kraft der Feder 18 aus der Vertiefung 42 der Schiebemuffe herausgedrückt. Beim Kuppeln des Zahnrads 28 mit dem Zahnrad 38 ist deshalb ein durch die Druckstücke 10 bewirkter Rastwiderstand zu überwinden.

Die Bewegung der Schiebemuffe 30 wird durch eine nicht gezeigte Schaltgabel gesteuert, die in eine Nut am äußeren Umfang der Schiebemuffe eingereift.

Wie in Figur 8 angedeutet ist, ragen die Vorsprünge 22 des Druckstücks 10 so weit in die Zahnzwischenräume der Innenverzahnung 32, daß das Gehäuse 12 des Druckstücks 10 auch unabhängig von dem Druckglied 14 als Abstandshalter zwischen dem Zahnrad 28 und der Schiebemuffe 30 wirken kann und so bei gebrochener oder zu schwacher Feder 18 ein Verzahnungsklappern verhindert.

## Patentansprüche

1. Druckstück für Synchroneinrichtungen in Schaltgetrieben mit einem Zahnrad (28), einer Schiebemuffe (30), die über eine Innenverzahnung (32) verschiebbar mit dem Zahnrad (28) in Eingriff steht, und mit zwischen dem Zahnrad (28) und der Schiebemuffe (30) angeordneten Druckstücken (10), die jeweils ein in einer axialen Nut (40) des Zahnrads (28) aufgenommenes Gehäuse (12) und eine Feder (18) aufweisen, die ein Druckglied (14) gegen die Innenverzahnung (32) der Schiebemuffe (30) vorspannt, **dadurch gekennzeichnet, daß** das Gehäuse (12) des Druckstücks (10) eine flache, quaderförmige Gestalt hat und daß die Feder (18) sich quer zur Vorspannungsrichtung erstreckt, sich mit ihrem Rand am Gehäuse (12) oder am Zahnrad (28) abstützt und mit ihrem Mittelteil das Druckglied (14) abstützt.

2. Druckstück nach Anspruch 1, **dadurch gekennzeichnet, daß** das Druckglied (14) ein Rastkörper ist, der in eine Vertiefung (42) der Innenverzahnung (32) der Schiebemuffe (30) eingreift.

3. Druckstück nach Anspruch 1 oder 2, **dadurch gekennzeichnet, daß** das Gehäuse (12) des Druckstücks (10) ein Formkörper aus Kunststoff ist.

4. Druckstück nach einem der vorstehenden Ansprüche, **dadurch gekennzeichnet, daß** die Feder (18) sich am Gehäuse (12) abstützt und daß das Druckglied (14) unverlierbar in dem Gehäuse (12) gehalten ist.

5. Druckstück nach einem der vorstehenden Ansprüche, **dadurch gekennzeichnet, daß** die Außenfläche des Gehäuses (12) verrundet ist.

6. Druckstück nach einem der vorstehenden Ansprüche, **dadurch gekennzeichnet, daß** das Gehäuse (12) an seiner radial äußeren Oberfläche Vorsprünge (22) bildet, die in die Zahnzwischenräume der Innenverzahnung (32) der Schiebemuffe (30) ragen.

7. Druckstück nach einem der vorstehenden Ansprüche, **dadurch gekennzeichnet, daß** die Feder (18) eine Blattfeder ist.

8. Druckstück nach einem der vorstehenden Ansprüche, **dadurch gekennzeichnet, daß** die Feder (18) in einer Ausnehmung (16) des Gehäuses (12) aufgenommen und an von den Wänden des Gehäuses (12) in diese Ausnehmung (16) ragenden Rippen (20) gehalten ist.

9. Druckstück nach den Ansprüchen 7 und 8, **dadurch gekennzeichnet, daß** die Feder (18) sich in ihrem Mittelteil nahezu über die gesamte Breite des Gehäuses (12) erstreckt und sich zu ihren auf den Rippen (22) abgestützten Enden verjüngt.

10. Druckstück nach Anspruch 8 oder 9, **dadurch gekennzeichnet, daß** die Oberflächen der Rippen (20), auf denen sich die Feder (18) abstützt, nach innen in der Richtung abfallen, die der Vorspannungsrichtung des Druckgliedes (14) entgegengesetzt ist.
